# EUROPEAN PATENT APPLICATION

(11) **EP 2 278 373 A1**
(43) Date of publication of application: **26.01.2011**
(21) Application number: 10169172.3
(22) Date of filing: 09.07.2010
(51) Int. Cl.: G02B 7/00, G02B 7/02, H01L 31/0232, G02B 13/00

(54) **Lens assembly and method of assembling lens elements in a lens mounting**

(30) Priority: 13.07.2009 GB 0912126
(71) Applicant: STMicroelectronics (Research & Development) Limited, Marlow, Buckinghamshire SL7 1YL (GB)
(72) Inventor: Halliday, William, Edinburgh, lothian EH12 8EX (GB)
(74) Representative: Cameron, Stewart

(57) **Abstract**

The invention relates to a lens assembly for aligning lens elements within a lens mount (110) along an optical axis (X). The lens assembly has a lens mount (110) which holds a lens assembly, an image sensor (122) and an optical filter (120). An optical filter holder (118) is secured to the lens mount (110). The optical filter holder (118) has an inwardly projecting shelf (128) having an upper contact surface which contacts a portion of the optical filter (120) and a lower contact surface which contacts a portion of the image sensor (122). This directly aligns the optical filter (120) and the image sensor (122) with the optical axis (X). The lower contact surface is provided on a downwardly projecting lip (130) of the inwardly projecting shelf (128) so as to contact an upper surface of the image sensor (122). The upper contact surface is provided on an upper surface of the inwardly projecting shelf (128) so as to contact with a lower surface of the optical filter (120).

A method of assembling lens elements in a lens mounting is also provided.

## Description

The present invention relates to a lens assembly for optically aligning lens elements within a lens mount. The invention is particularly, but not exclusively applicable to the manufacture of small solid state / micro-movement auto or fixed focus cameras for use in products such as camera phones.

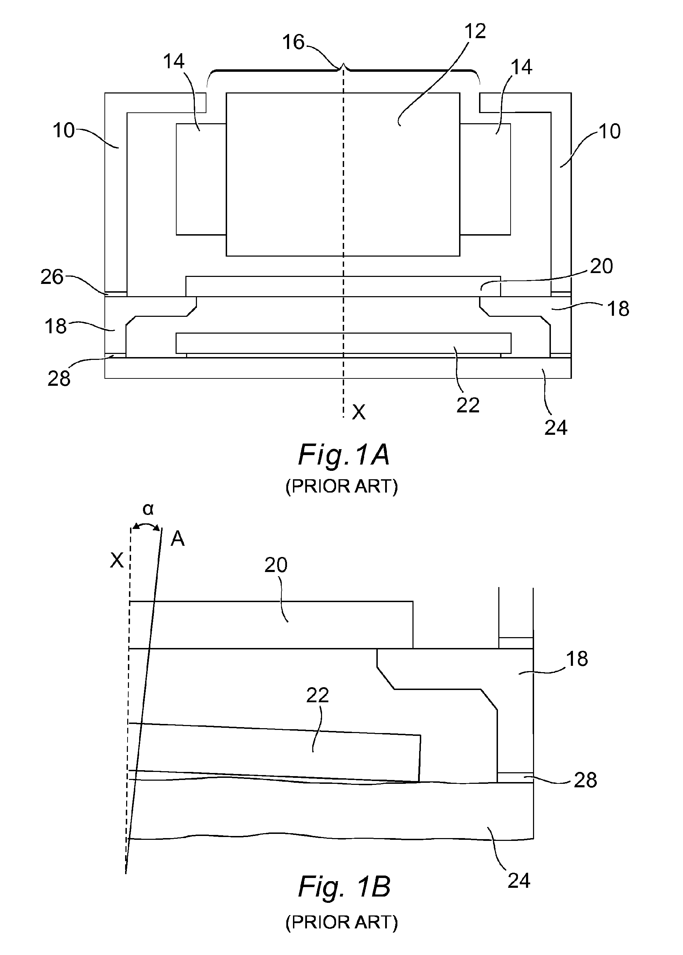

A prior art camera lens assembly is illustrated in Fig. 1. The upper portion of the lens assembly has a lens mount 10 which retains a lens barrel 12 on a carriage 14 in an aperture 16 provided at the top of the mount 10. Attached to the lower portion of the lens mount 10 is an infrared optical filter holder 18 which suspends an infrared optical filter element 20 above an image sensor 22. The image sensor 22 is secured to circuitry substrate 24. A layer of adhesive 26 extends around the lower rim of the lens mount 10 and secures the infrared optical filter holder 18 thereto.

In order to obtain satisfactory optical results from such assembled camera lenses, the numerous optical elements therein must be aligned with one another and with the image sensor very accurately. The maximum amount of tilt (angular misalignment) between the optical elements of the assembled camera lens and the image sensor must therefore be within very narrow limits (subsequently referred to as the "tolerance budget"). In particular, the increase in complexity and part count, and the decrease in overall dimensions of camera lenses in recent years has made it particularly difficult to keep within the tolerance budget for a given assembled camera lens. This is because the interface between each additional part and the rest of the lens assembly introduces an additional component of tilt. Auto-focus assemblies, which include additional mechanical actuators also contribute significant amounts of extra tilt which is difficult to control. In order to manage these problems, it is therefore increasingly important that every effort is made to reduce the overall degree of tilt in assembled lenses.

With reference to Fig. 1A, during assembly of such prior art lenses, the lower rim of an optical infrared filter holder 18 is typically pressed into a layer of adhesive 28 provided at a corresponding location on the substrate 24 until the optical infrared filter holder 18 is directly aligned against the upper surface of the substrate 24 and is held there by the adhesive 28. However, components of tilt are introduced by the inherent variations in thickness of the image sensor wafer 22 (often caused by the back lapping process applied during manufacture of the sensor wafer 22), the bonding of the image sensor 22 to the circuitry substrate 24, inherent warping and undulations in the circuitry substrate 24 (best illustrated in Fig. 1 B), and the adhesive bonding 26 provided between the optical infrared filter holder 18 and the rest of the lens mount 10. Therefore, even though the optical filter element holder 18 and substrate 24 are squarely aligned with one another, the normal axis A from the plane of the image sensor 22 is tilted out of alignment with the optical axis X of the other lens elements by an angle α.

The present invention seeks to address these problems.

According to the present invention, there is provided a lens assembly for aligning lens elements within a lens mount along an optical axis, the lens assembly comprising:-
a lens mount for holding a lens assembly;
an image sensor;
an optical filter;
and an optical filter holder secured to the lens mount, wherein the optical filter holder has an inwardly projecting shelf having an upper contact surface which abuts against a portion of the optical filter and a lower contact surface which abuts against a portion of the image sensor in order to directly align the optical filter and the image sensor with the optical axis, wherein the lower contact surface is provided on a downwardly projecting lip of the inwardly projecting shelf for contact with an upper surface of the image sensor and wherein the upper contact surface is provided on an upper surface of the inwardly projecting shelf for contact with a lower surface of the optical filter.

According to the present invention there is also provided a method of assembling lens elements in a lens mounting along an optical axis, the method comprising:-
providing a lens assembly in a lens mount;
providing an image sensor;
providing an optical filter having an inwardly projecting shelf and a downwardly projecting lip;
abutting an upper contact surface of the optical filter holder against a portion of the optical filter and a lower contact surface of the downwardly projecting lip against a portion of the image sensor in order to directly align the optical filter and the image sensor with the optical axis.

Further features and advantages of the invention will be made apparent from the following description and the claims.

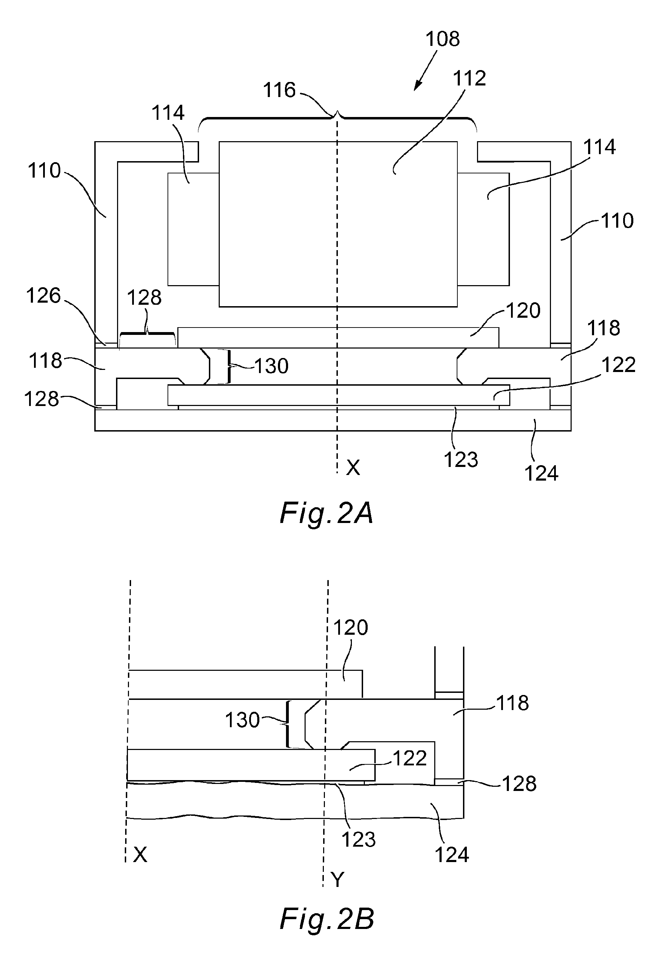

Embodiments of the invention will now be described, with reference to the accompanying drawings, in which:-
Fig. 2A is a schematic cross sectional side view of the lens assembly of the present invention; and
Fig. 2B is a more detailed cross sectional side view of one side of the lower portion of the apparatus of Fig. 2A illustrating (with exaggeration for clarity) the warping and undulations of a typical substrate and the resulting improved alignment provided by the invention.

The upper portion of a lens assembly 108 has a lens mount 110 which retains a lens barrel 112 in a lens carriage 114. An aperture 116 is provided in the top of the lens mount 110. Attached to the lower portion of the lens mount 110 is an optical filter holder 118 which suspends an optical filter element 120 above an image sensor 122. The image sensor 122 is secured to circuitry substrate 124; this is normally achieved by applying a drop of adhesive on the surface of the substrate and then pressing the image sensor 122 onto the drop of adhesive such that the adhesive spreads into a thin layer of adhesive 123 between the bottom of the image sensor 122 and the top of the substrate 124. A layer of adhesive 126 also extends around the lower rim of the lens mount 110 and secures the optical filter holder 118 thereto.

In the embodiment shown in Figs. 2A and 2B, the optical filter 120 is a glass infrared optical filter element. This is normally necessary in order to avoid overexposure of infrared light on the surface of the image sensor 122; however the invention is also suitable for reducing the tilt of alternative optical filter elements relative to the image sensor 122. For example, the optical filter could be a clear glass element which may not substantially change the nature of light passing there through but instead simply act as a seal to prevent ingress of dust particles which can adversely affect the resulting image sensed by the image sensor 122. Any suitable lens mount 110 could be used. The aperture 116 in the lens mount 110 allows passage of light through the lens barrel 112 and onto an image sensor.

The optical filter holder 118 has a radially inwardly projecting shelf 128 and a downwardly projecting lip 130. The holder 118 may be rectangular, square or annular in order to provide either a square, rectangular or annular aperture for passage of light there through.

During assembly, the image sensor 122 is attached to the substrate 124 and the optical filter element 120 is attached to the upper surface of the inwardly projecting shelf 128 at either side thereof. The optical filter holder 118 and hence the attached optical filter 120 are then placed onto a ring of adhesive 128 provided on the substrate 124. The bottom of the optical filter holder 118 is pushed into the adhesive layer 128 until the bottom surface of the downwardly projecting lip 130 directly contacts the upper surface of the image sensor 122 at either side thereof. This therefore directly aligns the optical filter 120, optical filter holder 118 and image sensor 122 along an axis Y (which is parallel to optical axis X) substantially regardless of any undulations in the substrate 124 or misalignment which would otherwise be introduced by the interface between the image sensor 122 and the substrate 124.

With the lower part assembled, the remaining elements of the lens 108 can be assembled thereon as normal.

It can be seen that with the described arrangement, any tilt or misalignment (α) which would previously have been introduced by image sensor back lapping, bonding of image sensor 122 to the substrate 124, undulations caused by variations in flatness or warping of the substrate 124, or bonding of the optical filter holder 118 to the substrate 124 have been eliminated. In other words, although the optical filter holder 18 is aligned with the substrate 24 in the prior art mount, there is no guarantee that the actual image sensor 24 is aligned with the optical filter element 20; whereas this is ensured in the present invention since the optical filter element 120, holder 118 and image sensor 122 are aligned by direct abutment against one another.

As well as immediately improving the optical performance of the assembled lens, since the invention reduces the inherent tilt in the assembled lens, any remaining contributors to tilt (such as the auto-focus stage) can be analysed more accurately and more effectively with a view to further reducing any tilt resulting from these components.

Another advantage of the present invention is that dust particles, which can be very detrimental to the performance of the image sensor 122, are prevented from coming into contact with the image sensor 122 due to the direct physical contact between the filter element 120 and the filter holder 118.

Modifications and improvement may be made to the foregoing without departing from the scope of the invention.

## Claims

1. A lens assembly for aligning lens elements within a lens mount (110) along an optical axis (X), the lens assembly comprising:-
a lens mount (110) for holding a lens assembly;
an image sensor (122);
an optical filter (120);
and an optical filter holder (118) secured to the lens mount (110), wherein the optical filter holder (118) has an inwardly projecting shelf (128) having an upper contact surface which abuts against a portion of the optical filter (120) and a lower contact surface which abuts against a portion of the image sensor (122) in order to directly align the optical filter (120) and the image sensor (122) with the optical axis (X), wherein the lower contact surface is provided on a downwardly projecting lip (130) of the inwardly projecting shelf (128) for contact with an upper surface of the image sensor (122) and wherein the upper contact surface is provided on an upper surface of the inwardly projecting shelf (128) for contact with a lower surface of the optical filter (120).

2. A lens assembly according to claim 1, wherein the optical filter (120) comprises a glass infrared filter element.

3. A lens assembly according to either of claims 1 or 2, wherein the image sensor (122) is provided on a circuitry substrate (124).

4. A lens assembly according to claim 3, wherein the optical filter holder (118) is secured to the circuitry substrate (124) by an adhesive layer (123).

5. A lens assembly according to any preceding claim, wherein the optical filter holder (118) is secured to the lens mount (110) by an adhesive layer (126).

6. A method of assembling lens elements in a lens mounting along an optical axis (X), the method comprising:-
providing a lens assembly in a lens mount (110);
providing an image sensor (122);
providing an optical filter (120) having an inwardly projecting shelf (128) and a downwardly projecting lip (130);
abutting an upper contact surface of the optical filter holder (118) against a portion of the optical filter (122) and a lower contact surface of the downwardly projecting lip (130) against a portion of the image sensor (122) in order to directly align the optical filter (120) and the image sensor (122) with the optical axis (X).

7. A method according to claim 6, further comprising providing the image sensor (122) on a circuitry substrate (124), applying an adhesive layer (123) on the circuitry substrate (124), and pressing the optical filter holder (118) into the adhesive layer (123) until the optical filter holder (118) abuts against the image sensor (122).

8. An optical device having a lens assembly comprising a lens mount (110) for holding a lens assembly, an image sensor (122), an optical filter (120), and an optical filter holder (118) secured to the lens mount (110) along an optical axis (X), wherein the optical filter holder (118) has an inwardly projecting shelf (128) having an upper contact surface which abuts against a portion of the optical filter (120) and a lower contact surface provided on a downwardly projecting lip (130) of the inwardly projecting shelf (128) which abuts against a portion of the image sensor (122) in order to directly align the optical filter (120) and the image sensor (122) with the optical axis (X).
